## Europäisches Patentamt

(19) ))) **European Patent Office**

**Office européen des brevets**

(11) Numéro de publication: **0 113 487**

**B1**

(12) # FASCICULE DE BREVET EUROPÉEN

(45) Date de publication du fascicule du brevet:
15.10.86

(51) Int. Cl.⁴: **H 04 B 3/23**

(21) Numéro de dépôt: **83201816.2**

(22) Date de dépôt: **20.12.83**

(54) **Procédé utilisé dans un dispositif d'annulation d'écho pour la mesure d'un retard d'écho et dispositif de mise en oeuvre de ce procédé.**

(30) Priorité: **30.12.82 FR 8222124**

(43) Date de publication de la demande:
**18.07.84 Bulletin 84/29**

(45) Mention de la délivrance du brevet:
**15.10.86 Bulletin 86/42**

(84) Etats contractants désignés:
**BE CH DE FR GB IT LI NL SE**

(56) Documents cité:
DE-A-2 633 394
US-A-3 721 777

**FIFTH INTERNATIONAL CONFERENCE ON DIGITAL SATELLITE COMMUNICATIONS, 23-26 mars 1981, Gênes, IEEE Cat. no. 81-CH1646-9, pages 259-264, New York, US M. COPPERI et al.: "A new approach for a microprogrammed echo canceller"**
**IBM TECHNICAL DISCLOSURE BULLETIN, vol. 21, no. 5, octobre 1978, pages 1916-1918, New York, US A. DESBLACHE et al.: "Centering transversal equalizer tap coefficients"**
**IEEE TRANSACTIONS ON COMMUNICATIONS, vol. COM-21, no. 2, février 1973, pages 143-147, New York, US V.G. KOLL et al.: "Simultaneous two-way data transmission over a two-wire circuit"**
**IEEE TRANSACTIONS ON COMMUNICATIONS, vol. COM-25, no. 7, juillet 1977, pages 654-666, New**

(73) Titulaire: **TELECOMMUNICATIONS RADIOELECTRIQUES ET TELEPHONIQUES T.R.T., 88, rue Brillat Savarin, F-75013 Paris (FR)**

(72) Inventeur: **Barazeche, Bahman, SOCIETE CIVILE S.P.I.D. 209 rue de l'Université, F-75007 Paris (FR)**
Inventeur: **Alexis, Roger Pierre Joseph, SOCIETE CIVILE S.P.I.D. 209 rue de l'Université, F-75007 Paris (FR)**
Inventeur: **Guidoux, Loic Bernard Yves, SOCIETE CIVILE S.P.I.D. 209 rue de l'Université, F-75007 Paris (FR)**

(74) Mandataire: **Chaffraix, Jean, Société Civile S.P.I.D. 209, rue de l'Université, F-75007 Paris (FR)**

(56) Documents cité: (suite)
**York, US S.B. WEINSTEIN: "A passband data-driven echo canceller for full-duplex transmission on two-wire circuits"**
**IEEE TRANSACTIONS ON INFORMATION THEORY, vol. IT-18, no. 4, juillet 1972, pages 531-532, New York, US D.C. CHU: "Polyphase codes with good periodic correlation properties"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé utilisé dans un dispositif d'annulation d'écho incorporé dans un équipement émetteur-récepteur pour annuler dans la voie réception un signal d'écho engendré par un signal appliqué à la voie émission et formé d'un écho proche pratiquement non retardé et d'un écho lointain retardé, ce dispositif d'annulation d'écho comprenant un annuleur d'écho proche recevant un signal de la voie émission et un annuleur de l'écho lointain recevant ledit signal de la voie émission affecté d'un retard substantiellement égal au retard mesuré de l'écho lointain.

On sait que les annuleurs d'écho sont des dispositifs adaptatifs, qui sont incorporés par exemple dans les modems de transmission de données connectés à un voie de transmission bidirectionnelle, pour annuler automatiquement les échos intempestifs se produisant dans la voie réception, en réponse au signal appliqué à la voie émission. Les annuleurs d'écho conventionnels sont généralement conçus pour annuler les signaux d'écho non retardés ou relativement peu retardés vis à vis du signal émis et pouvant se produire au cours d'un intervalle de temps de 40 à 50 ms succédant à l'instant origine d'émission du signal. Ces caractéristiques sont pratiquement suffisantes pour annuler les échos se produisant sur toutes les liaisons terrestres nationales et internationales.

Or les liaisons internationales s'effectuent de plus en plus par l'intermédiaire de satellites de communication. Dans une telle liaison comportant un trajet par satellite entre deux stations hertziennes, il peut se produire dans la voie réception d'un modem un écho dit proche, peu ou pas retardé, engendré dans la partie de la liaison avant le trajet par satellite et un écho dit lointain qui est engendré dans la partie de la liaison après le trajet par satellite et qui est donc affecté d'un retard τ important, dépendant notamment du temps de propagation des ondes, dans le trajet par satellite. Compte tenu du fait que le satellite peut être géostationnaire ou non et que le trajet terrestre peut être variable, on peut estimer que dans le réseau commuté international, le retard τ de l'écho lointain peut varier environ entre 220 et 630 ms.

Pour annuler en même temps l'écho proche et l'écho lointain qui ont chacun une durée relativement faible de l'ordre d'une dizaine ou de quelques dizaines de ms, mais qui sont séparés par un intervalle de temps élevé de l'ordre du retard τ, il est avantageux d'utiliser la structure décrite ci-desus et connue de l'article de Stephen B. Weinstein, intitulé "A Passband Data Driven Echo Canceller for Full-Duplex Transmission on Two-Wire Circuits" et paru dans la revue IEEE Transactions, vol. COM-25, n°7, juillet 1977, pages 654—666. Cette structure comporte une section pour annuler l'écho proche, une ligne à retard simulant le retard τ et connectée à une section pour annuler l'écho lointain. Cette structure permet d'utiliser deux annuleurs d'écho conventionnels de complexité raisonnable, mais nécessite une mesure du retard τ de l'écho lointain pour introduire cette information dans la ligne à retard. Dans l'article précité, il est proposé, pour mesurer ce retard, d'appliquer à la voie de transmission une impulsion formé d'une sinusoïde à 1000 Hz et durant quelques ms, et de déterminer le retard de l'écho lointain en résultant par un détecteur d'énergie à fenêtre mobile. Avec ce procédé, le signal servant à la mesure du retard d'écho n'est donc émis que pendant une durée courte, ce qui est un inconvénient dans le communications par satellite pour lesquelles l'émission d'énergie doit être permanente dans une voie de communication, pour conserver cette voie.

La présenté invention fournit pour la mesure du retard τ de l'écho lointain, un procédé tout a fait différent, utilisant pour engendrer l'écho une séquence particulière de données qui peut être émise avec le même type de modulation que celle servant ensuite à la transmission du signal utile; du côté réception, ce procédé peut être facilement mis en oeuvre de façon numérique et fournir le retard avec une précision parfaitement définie, pouvant être réduite à la valeur juste souhaitable.

Conformément à l'invention, ce procédé de mesure du retard τ de l'écho lointain comporte les étapes suivantes:

— l'émission par modulation d'une porteuse d'au moins un séquence de données ayant une fonction d'autocorrélation périodique à lobes latéraux de valeur négative ou nulle, ayant une durée au moins égale à la valeur maximale du retard à mesurer et un nombre d'éléments déterminé par la précision souhaitée par la mesure du retard;

— après chaque séquence émise, la calcul de la fonction de corrélation entre les données de la séquence émise suivante et les données formées en démodulant le signal reçu et l'enregistrement dans une mémoire d'échantillons successifs, représentatifs de cette fonction de corrélation;

— après le calcul de ladite fonction de corrélation, un traitement des échantillons enregistrés consistant, après l'élimination des échantillons pouvant dépendre de l'écho proche, à déterminer l'échantillon correspondant au maximum de la fonction de corrélation et à déduire du rang de cet échantillon le retard de l'écho lointain.

La description suivante, en regard des dessins annexés le tout donné à titre d'exemple fera bien comprendre comment l'invention peut être réalisée.

La figure 1 représente un modem de transmission de données, muni d'un dispositif d'annulation d'écho auquel s'applique le procédé de l'invention.

La figure 2 représente des diagrammes

illustrant le déroulement dans le temps des étapes du procédé de l'invention.

La figure 3 est une schéma de réalisation possible pour un dispositif mettant en oeuvre la deuxième étape du procédé de l'invention.

La figure 4 représente le schéma d'un corrélateur élémentaire utilisé dans le mode de réalisation de la figure 3.

La figure 5 représente des diagrammes en fonction du temps, destinés à montrer le traitement effectué pendant la troisième étape.

La figure 6 est un schéma de réalisation possible pour la mise en oeuvre de cette troisième étape.

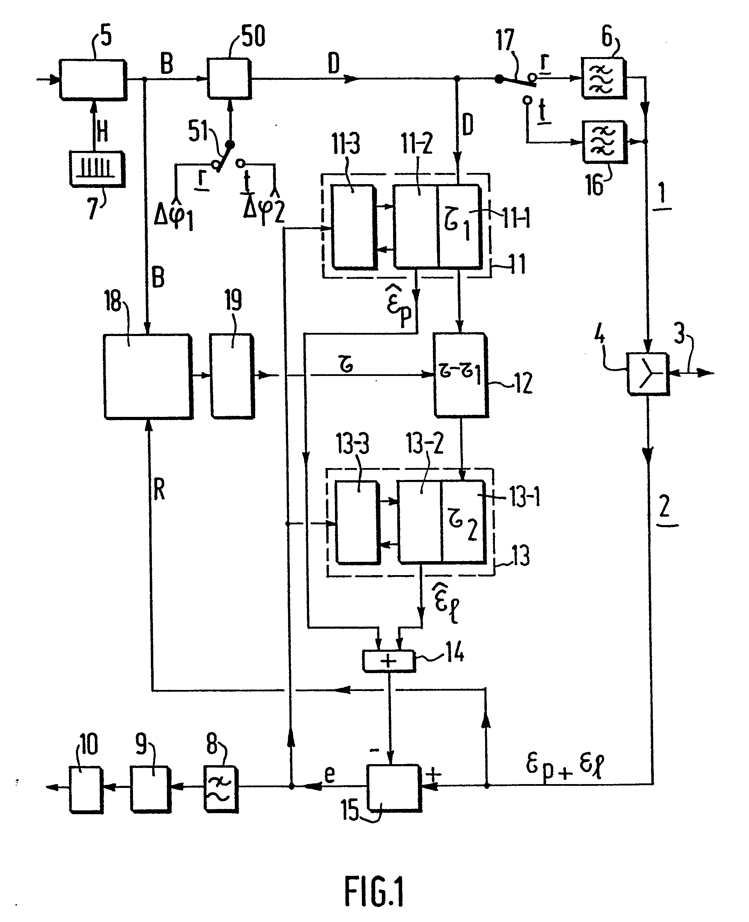

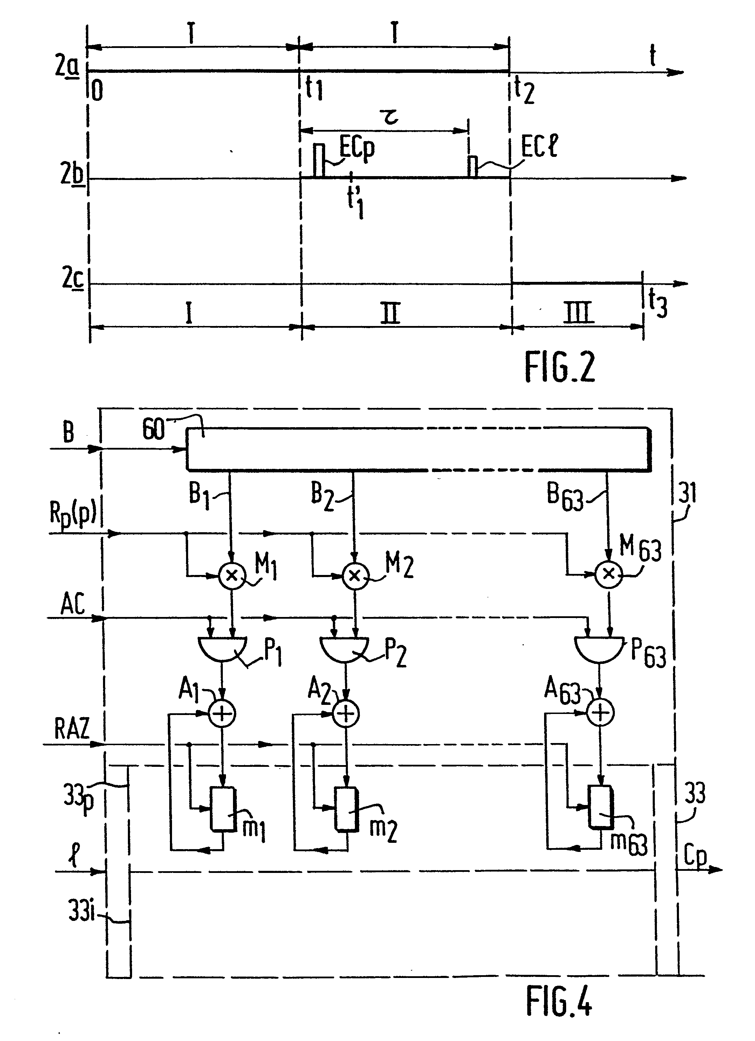

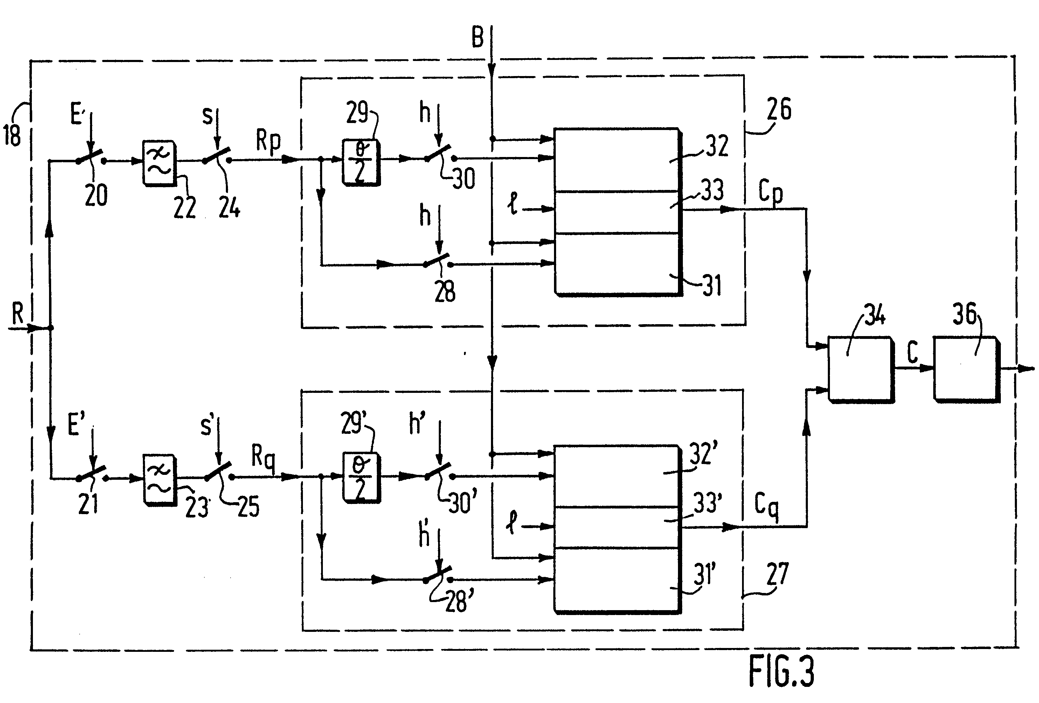

Le modem muni d'un dispositif d'annulation d'écho, représenté sur la figure 1 comporte une voie émission a et une voie réception 2 couplées à un voie de transmission bidirectionnelle 3 par l'intermédiaire d'un circuit de couplage 4.

La voie émission 1 comporte un codeur 5 qui convertit les données binaires à transmettre, provenant d'un terminal non représente, en un signal en bande de base B qui est complexe dans le cas général et dont la phase et l'amplitude peuvent changer de valeur, en fonction des données binaires à transmettre, à la fréquence d'horloge H fournie par le générateur d'horloge 7. Le signal complexe B est appliqué au circuit 50 dans lequel sa phase est augmentée, à chaque période 1/H, de la variation de phase (pendant cette période 1/H) de la porteuse utilisée pour la transmission. En régime de transmission des données utiles cette variation de phase de valeur $\Delta\varphi_1$ est appliquée au circuit 50, par l'intermédiaire d'un circuit commutateur 51 établi sur la position r. Le signal complexe D fourni par le circuit 50 et affecté ainsi des variations de phase de la porteuse est appliqué, en régime de transmission des données utiles, à un filtre passebande 6 pour signaux complexes, par l'intermédiaire d'un circuit commutateur 17 établi alors sur la position r. La bande passante du filtre 6 est centrée sur la fréquence de la porteuse utilisée pour la transmission des données utiles et ce filtre 6 fournit ainsi le signal analogique de porteuse modulée qui est dirigé vers l'accès émission du circuit de couplage 4. La vitesse de modulation de la porteuse est déterminée par la fréquence d'horloge H. Dans le cas par exemple d'un modem normalisé utilisant la modulation de phase à 8 états, la vitesse de modulation est de 1600 bauds et la fréquence de la porteuse est de 1800 Hz.

Sur l'accès réception du circuit de couplage 4 ne devrait apparaître que le signal de porteuse modulé par des données, transmis par la voie de transmission 3, en provenance d'un modem distant. Cet accès réception est relié via un filtre passe-bas 8, à un démodulateur 9 qui doit restituer le signal de données en bande de base engendré dans l'émetteur distant. Le démodulateur 9 est relié à un décodeur 10 qui effectue l'opération inverse de celle effectuée dans le modem distant par un codeur correspondant au codeur 5 de façon à restituer des bits de données vers un terminal non représente.

En fait, lorsqu'un signal utile est émis en direction du modem distant par la voie émission 1, des signaux d'écho intempestifs engendrés notamment par des imperfections dans les circuits de couplage deux fils-quatre fils de la voie de transmission, peuvent apparaître sur l'accès réception du circuit de couplage 4 et gravement perturber la restitution des données dans la voie réception 2. Comme on l'a expliqué, lorsque la voie de transmission comporte un trajet par satellite, le signal d'écho intempestif peut comporter simultanément un écho proche non retardé engendré entre le modem local et le trajet par satellite et un écho lointain engendré entre le trajet par satellite et le modem distant. Ces deux types d'échos ont sensiblement la même durée, au maximum de quelques dizaines de ms; mais l'écho lointain a, par rapport à l'écho proche, un retard $\tau$ pouvant varier par exemple entre 220 et 630 ms.

Pour réaliser de façon économique l'annulation d'un signal d'écho formé d'un écho proche et d'un écho lointain, on peut utiliser la structure connue montrée sur la figure 1. Cette structure comprend un annuleur de l'écho proche 11 comportant notamment une mémoire 11-1 ayant la fonction d'une ligne à retard, une mémoire 12 ayant la fonction d'une ligne à retard et un annuleur de l'écho lointain 13 comportant notamment une mémoire 13-1 ayant la fonction d'une ligne à retard. Les trois lignes à retard 11-1, 12 et 13-1 sont montées en cascade et reçoivent le signal de données affecté des variations de phase de la porteuse par le circuit 50. On peut supposer pour simplifier que la fréquence d'échantillonnage du signal D appliqué à la structure 11, 12, 13 est égale à la fréquence d'horloge H fixant la vitesse de modulation. En effet, dans le cas où la fréquence d'échantillonnage est un multiple de la fréquence H, on sait que l'on peut considérer le signal D comme réparti dans le temps sur plusieurs ·structures identiques travaillant chacune de la même manière avec la fréquence d'échantillonnage H.

L'annuleur d'écho proche 11 comporte un circuit de calcul 11-2 qui forme la somme pondérée des échantillons du signal D stockés dans la ligne à retard 11-1, avec des coefficients de pondération déterminés dans le circuit de réglage 11-3. La ligne à retard 11-1 produit un retard $\tau_1$ sensiblement égal à la durée de l'écho proche. La ligne à retard 12 produit un retard sensiblement égal à $\tau-\tau_1$ de façon que les échantillons du signal D parviennent à l'entrée de la ligne à retard 13-1 avec un retard sensiblement égal au retard $\tau$ de l'écho lointain. L'annuleur de l'écho lointain 13 comporte un circuit de calcul 13-2 qui forme la somme pondérée des échantillons du signal D retardés, stockés dans la ligne à retard 13-1, avec des coefficients de pondération déterminés dans le circuit de réglage 13-3. La ligne à retard 13-1 produit un retard $\tau_2$ qui est sensiblement égal à la durée maximale de l'écho lointain et qui est du même ordre de grandeur que $\tau_1$.

Les circuit 11-1, 11-2 d'une part et 13-1, 13-2 d'autre part, forment des filtres transversaux dont les signaux de sortie $\hat{\varepsilon}_p$ et $\hat{\varepsilon}_l$ sont appliqués au circuit additionneur 14. Le signal $\hat{\varepsilon}_p + \hat{\varepsilon}_l$ sortant du circuit additionneur 14 est appliqué à l'entrée (−) du circuit de différence 15. Par son entrée (+) et sa sortie, ce circuit de différence 15 est inséré dans la voie réception 2 entre le circuit de couplage 4 et le filtre 8. Le signal de sortie e du circuit de différence 15 est appliqué en outre aux deux circuits de réglage 11-3 et 13-3 pour régler les coefficients des filtres transversaux de l'annuleur d'écho proche 11 et de l'annuleur d'écho lointain 13. Lorsque ces coefficients sont convenablement réglés, le signal $\hat{\varepsilon}_p$ fourni par le filtre de l'annuleur d'écho proche 11 est pratiquement égal au signal d'écho proche $\varepsilon_p$ qui apparaît sur la voie réception 2 et le signal $\hat{\varepsilon}_l$ fourni par le filtre de l'annuleur d'écho lointain 13 est pratiquement égal au signal d'écho lointain $\varepsilon_l$ qui apparaît également sur la voie réception. On obtient alors que dans le signal de sortie e du circuit de différence 15, le signal $\varepsilon_p + \varepsilon_l$ résultant des échos proche et lointain est pratiquement annulé. Le réglage des coefficients de filtre des annuleurs d'écho 11 et 13 s'effectue par exemple par récurrences successives, suivant l'algorithme du gradient, de façon à minimiser la valeur quadratique moyenne du signal de différence e.

Mais pour que cette structure connue puisse fonctionner correctement de cette manière, il est nécessaire que l'annuleur d'écho lointain 13 travaille sur le signal D ayant subi le même retard $\tau$ que l'écho lointain. La présente invention fournit un procédé simple et efficace pour mesurer ce retard, variable suivant le trajet de l'écho lointain.

Ce procédé comporte des étapes qui se déroulent dans le temps, suivant les diagrammes de la figure 2. Le diagramme 2a concerne les opérations effectuées dans la voie émission 1 pendant les étapes I et II; le diagramme 2b concerne les opérations effectuées, à partir du signal D dans la voie émission et du signal R dans la voie réception 2, pendant l'étape II; le diagramme 2c concerne un traitement effectué pendant l'étape III.

L'étape I se produisant de l'instant t=0 à l'instant $t_1$ (voir diagramme 2a) consiste à émettre par la voie émission 1, par modulation d'une porteuse, une séquence de données de durée T, ayant une fonction d'autocorrélation périodique à lobes latéraux de valeur négative ou nulle. On peut utiliser pour l'émission de cette séquence la même porteuse que celle utilisée en régime de transmission des données utiles, les circuits commutateurs 51 et 17 étant alors établis dans la position r. Mais, comme on l'expliquera par la suite, il peut être avantageux pour l'émission de cette séquence d'utiliser une autre porteuse de fréquence différente. Dans ce cas les circuits commutateurs 51 et 17 sont établis sur la position t. De cette manière, dans le circuit 50, la phase du signal en bande de base B est augmentée de la

variation de phase $\Delta\varphi_2$ de cette autre porteuse pendant une période 1/H tandis que le signal D ainsi obtenu est dirigé vers le filtre passe bande 16 pour signaux complexes, dont la bande passante est centrée sur la fréquence de ladite autre porteuse. La durée T de cette séquence émise est au moins égale à la valeur maximale du retard $\tau$ à mesurer. Le nombre d'éléments de cette séquence est déterminé par la precision souhaitée pour la mesure du retard. Comme on le comprendra aisément par la suite, la precision sur la mesure du retard est déterminée par la durée de chaque élément de la séquence.

L'étape II est mise en oeuvre dans le circuit 18 de la figure 1 qui reçoit d'une part le signal B en bande de base fourni par le codeur 5 et d'autre part le signal R reçu dans la voie réception 2. Pendant cette étape II, un nouvelle séquence identique à celle émise pendant l'étape I est émise de la même manière de l'instant $t_1$ à l'instant $t_2$ (voir diagramme 2a). En même temps, pendant la durée T de cette nouvelle séquence émise (voir diagramme 2b), on calcule la fonction de corrélation entre les données en bande de base de la nouvelle séquence émise et les données reçues formées en démodulant le signal reçu dans la voie réception 2. Les échantillons successifs de cette fonction de corrélation sont enregistrés dans une mémoire. Comme le montre très schématiquement le diagramme 2b, on peut trouver parmi les échantillons calculés et enregistrés, deux échantillons particuliers, d'amplitude plus élevée que les autres, un échantillon $EC_p$ dû à l'écho proche et proche de l'instant $t_1$ et un échantillon $EC_l$ dû à l'écho lointain et se produisant à un instant décalé du retard $\tau$ à mesurer par rapport à l'instant $t_1$.

L'étape III est mise en oeuvre dans le circuit 19 de la figure 1. Elle peut se dérouler par exemple juste après l'étape II, de l'instant $t_2$ à l'instant $t_3$ (voir diagramme 2c). Elle consiste en un traitement des échantillons successifs de fonction de corrélation, enregistrés dans la mémoire pendant l'étape II, pour déterminer, après l'élimination des échantillons pouvant dépendre de l'écho proche, l'échantillon correspondant au maximum de la fonction de corrélation; le rang de cet échantillon, c'est-à-dire pratiquement son emplacement dans la mémoire fournit alors une information caractérisant le retard $\tau$ de l'écho lointain. Il est aisé de comprendre que la précision de mesure de retard $\tau$ dépend de la durée de chaque élément de fonction de corrélation, c'est-à-dire en fait de la durée de chaque élément de la séquence émise.

L'information caractérisant le retard $\tau$ est utilisée dans la ligne à retard 12 de l'annuleur d'écho, pour retarder en conséquence le signal de données D appliqué à l'annuleur d'écho lointain 13. Pour définir la longueur de la ligne à retard 13-1 de cet annuleur d'écho, on doit tenir compte de la précision de mesure du retard $\tau$.

On va maintenant montrer comment peuvent être mises en oeuvre les différentes étapes du procédé de l'invention. Pour fixer les idées, on supposera à titre d'exemple que dans le modem associé à l'annuleur d'écho, les données utiles sont normalement émises en utilisant la modulation de phase à 8 états, avec une porteuse à 1800 Hz et une vitesse de modulation de 1600 bauds.

Pour la séquence à émettre durant les étapes I et II, une première possibilité consiste à utiliser des séquences connues sous le nom de séquences de longuer maximale. Les longueurs possibles comptées en éléments binaires sont $N = 2^n - 1$, n étant un nombre entier. Ces séquences constituées de bits +1 et −1 ont une fonction d'autocorrélation périodique dont le lobe principal a la valeur N et tous les lobes latéraux ont la valeur −1. Avec une telle séquence binaire appliquée au codeur 5, le signal en bande be base B est réel et a une phase de 0 ou 180$^{\circ}$ selon que les bits de la séquence ont la valeur +1 ou −1. Si l'on utilise la porteuse de 1800 Hz servant en régime de transmission des données utiles, les circuits commutateurs 51 et 17 sont établis sur la position $r$ de sorte que le signal de données D fourni par le circuit 50 est affecté de la variation de phase $\Delta\varphi_1$ de la porteuse pendant la période de modulation

$$\frac{1}{1600}$$

s et ce signal D est appliqué au filtre 6. Mais, comme on le verra par la suite, il est plus avantageux d'utiliser une fréquence de porteuse égale à la fréquence de modulation, soit 1600 Hz. Dans ce cas, les circuits commutateurs 51 et 17 sont établis sur la position $t$. Pour cette fréquence de porteuse, la variation de phase $\Delta\varphi_2$ à utiliser dans le circuit 50 et 360$^{\circ}$ et son action sur le signal en bande de base B peut être omise; le signal de données D est appliqué au filtre 16.

Une autre possibilité pour la séquence à émettre consiste à utiliser des séquences de données polyphases dont la fonction d'auto-corrélation périodique a des lobes latéraux qui sont tous nuls. Ces séquences sont évoquées par exemple dans le brevet américain n° 3 099 796 et dans un article de D.C. CHU intitulé "Polyphase Code with good periodic correlation properties" et paru dans la revue IEEE Transactions on Information Theory de Juillet 1972. Une telle séquence est formée de données complexes et constitue le signal en bande de base B, qui, comme on l'a expliqué, est appliqué au circuit 50 pour être affecté de la variation de phase de la porteuse pendant une période de modulation. On a pu vérifier par exemple qu'avec la modulation à 8 états de phase, on peut obtenir des séquences de longueur N=64, ayant une fonction d'auto-corrélation périodique à lobes latéraux nuls; avec les modulations à 4 ou 2 états de phases, on peut obtenir de telles séquences ayant les longueurs N=16 ou 4.

La durée totale T des séquences à émettre (de l'un ou l'autre des 2 types donnés ci-dessus) doit être au moins égale à la valeur maximale du retard τ de l'écho lointain, 630 ms par exemple. On peut se contenter par exemple, pour la mesure de ce retard τ, d'une précision de $\pm 5$ ms, ce qui signifie que chaque élément d'une séquence (de l'un ou l'autre type) doit avoir une durée de 10 ms. On pourra utiliser par exemple une séquence de longueur maximale de 63 éléments ou une séquence polyphase de 64 éléments. Ces éléments devront alors être émis a la cadence de 100 Hz, soit à une cadence 16 fois plus faible que la cadence de 1600 Hz normale. Pour cette émission à la cadence de 100 Hz des éléments des séquences servant à mesurer le retard τ, il est avantageux, afin d'utiliser dans la voie émission les mêmes circuits que dans le fonctionnement normal, de faire fonctionner la voie émission à la cadence normale de 1600 Hz, en répétant 16 fois la même valeur pour chaque élément de ces séquences.

Le circuit 18 mettant en oeuvre l'étape II du procédé de l'invention peut être réalisé suivant la schéma de la figure 3. Ce circuit 18 reçoit d'une part le signal R apparaisant sur l'accès réception du circuit de couplage 4 et d'autre part le signal en bande de base B de la voie émission, qui est constitué pendant l'étape II, par une séquence de l'un des types décrits plus haut.

On doit d'abord démoduler le signal reçu R. On peut effectuer pour cela une démodulation non cohérente à l'aide de la porteuse d'émission en phase et de la porteuse d'émission en quadrature. Dans le cas où la porteuse d'émission, utilisée pour l'émission de la séquence de mesure du retard, a une fréquence égale au rythme de modulation (H=1600 Hz dans l'exemple choisi), la démodulation du signal R peut être effectuée de façon particulièrement simple comme le montre la figure 3. Le signal reçu R est appliqué à deux circuits d'échantillonnage 20 et 21 dont l'un 20 est actionné par un signal d'échantillonnage E ayant la fréquence (1600 Hz) et la phase de la porteuse d'émission et dont l'autre 21 est actionné par un signal d'échantillonnage E' ayant la même fréquence que E, avec un déphasage de 90 correspondant à un décalage temporel de

$$\frac{1}{4} \cdot \frac{1}{1600} \text{s.}$$

L'échantillonnage opéré à la fréquence de la porteuse dans les circuits 20 et 21 revient à effectuer une opération de démodulation. A la sortie des circuits d'échantillonnage 20 et 21 sont connectés des filtres passe-bas 22 et 23, destinés à éliminer les composantes de frequences supérieures à la fréquence fondamentale du spectre de la séquence de données émise (1600 Hz dans l'exemple choisi). A la sortie des deux filtres 22 et 23, on obtient ainsi, avec une fréquence d'échantillonnage égale au rythme de modulation H=1600 Hz, les composantes en phase et en quadrature du signal reçu R, ramené en bande de base. Ces composantes sont appliquées aux circuits d'échantillonnage 24 et 25 qui sont actionnés par deux signaux d'échantillonnage s et s' ayant la même fréquence et décalés entre eux comme les signaux d'échantillonnage E et E'. La fréquence d'échantillonnage déterminée par les signaux d'échantillonnage s et s' doit être au moins le double de la fréquence des données dans la séquence émise. Dans l'exemple choisi où cette fréquence des données est de 100 Hz, on peut utiliser une fréquence d'échantillonnage de 200 Hz.

A la sortie des deux circuits d'échantillonnage 24 et 25, on obtient ainsi les deux composantes en phase et en quadrature $R_p$ et $R_q$ formant ensemble un signal complexe, échantillonné à 200 Hz. On doit maintenant calculer la fonction de corrélation entre ce signal complexe et le signal en bande de base B de la voie émission, constitué par une séquence de longueur maximale ou une séquence de données polyphases. Dans ce dernier cas, le signal B est composé de données complexes et le calcul de la fonction de corrélation comporte des multiplications de termes complexes dont les parties réelle et imaginaire sont différentes de zéro. Dans le cas d'une séquence de longueur maximale, le signal B comporte des données réelles de valeur +1 et −1 et le calcul de la fonction de corrélation ne comporte que des multiplications de termes réels. Dans la suite de la description de la figure 3, on se place pour simplifier dans le cas d'utilisation d'une séquence de longueur maximale et les signaux $R_p$ et $R_q$ sont alors appliqués aux deux corrélateurs 26 et 27 ayant la même structure et recevant chacun le signal B en bande de base. Pour les raisons expliquées plus haut, on se place dans le cas pratique où cette séquence est formée de 63 éléments de durée 10 ms.

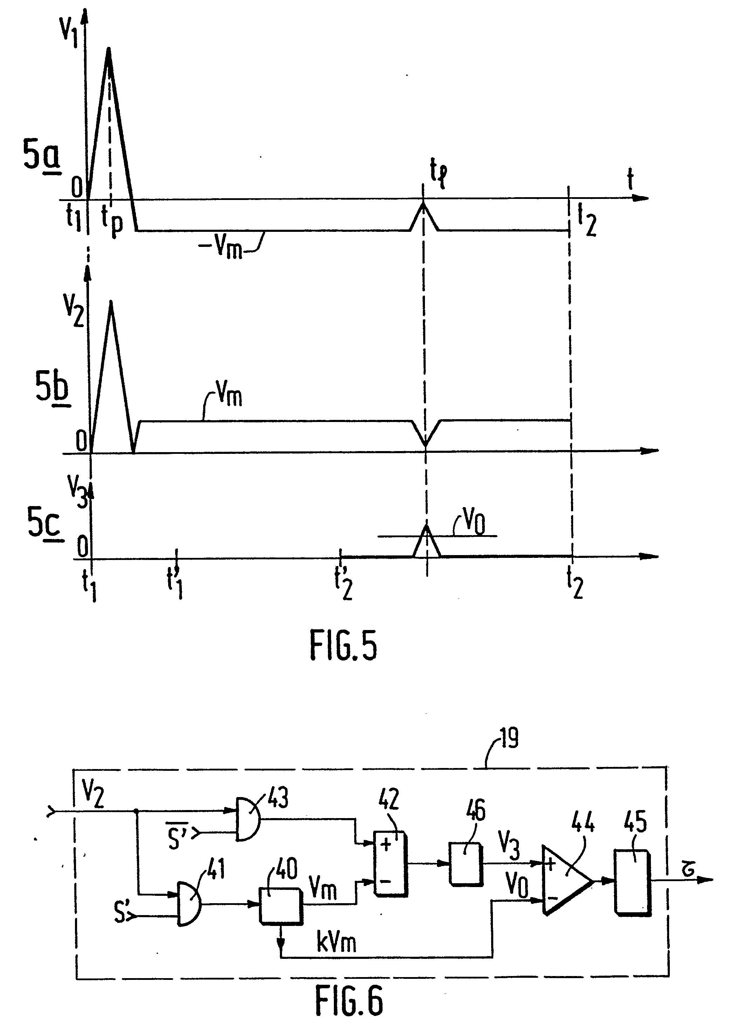

Dans le corrélateur 26, les échantillons à 200 Hz du signal $R_p$ sont appliqués, d'une part, directement au circuit d'échantillonnage 28, d'autre part, via le circuit de retard 29, au circuit d'échantillonnage 30. Le circuit de retard 29 produit un retard égal à

$$\frac{1}{200}s;$$

les deux circuits d'échantillonnage 28 et 30 sont actionnés par le signal d'échantillonnage h de fréquence 100 Hz, synchrone du signal d'échantillonnage s de sorte que ces circuits d'échantillonnage 28 et 30 fournissent respectivement à la fréquence 100 Hz les échantillons pairs $R_p(p)$ et les échantillons impairs $R_p(i)$ du signal $R_p$. Ces échantillons pairs et impairs sont appliqués respectivement aux corrélateurs élémentaires 31 et 32. Ces derniers reçoivent par ailleurs le signal en bande de base B et utilisent en commun une mémoire 33. On décrira plus loin à l'aide de la figure 4 la structure des corrélateurs élémentaires 31 et 32. Ainsi qu'il ressortira de cette description, pendant l'étape II s'étendant de l'instant $t_1$ à l'instant $t_2$ le corrélateur élémentaire 31 forme 63 échantillons pairs de la fonction de corrélation entre le signal en bande de base B et les échantillons pairs du signal $R_p$. Pendant cette étape II, le corrélateur élémentaire 32 forme 63 échantillons impairs de la fonction de corrélation entre le signal en bande de base B et les échantillons impairs du signal $R_p$. Les 63 échantillons pairs formés dans le corrélateur 31 sont disponibles à l'instant $t_2$ à des adresses paires de la mémoire 33 et les 63 échantillons impairs formés par le corrélateur 32 sont disponibles à l'instant $t_2$ à des adresses impaires de la mémoire 33. Sous la commande d'un signal I de lecture de la mémoire 33, les 126 échantillons stockés dans la mémoire 33 peuvent apparaître en série à la sortie de cette mémoire, les échantillons pairs et impairs étant entrelacés. Ces 126 échantillons représent la composante en phase $C_p$ de la fonction de corrélation recherchée, avec une fréquence d'échantillonnage de 200 Hz.

Le corrélateur 27 qui traite le signal $R_q$ est formé des éléments 29' à 33' identiques aux éléments 29 à 33 du corrélateur 26 et connectés de la même manière. Les circuits d'échantillonnage 28' et 30' sont actionnés par le signal d'échantillonnage h' synchrone du signal d'échantillonnage s'. Le fonctionnement du corrélateur 27 est identique à celui du corrélateur 26 et sous la commande d'un signal de lecture, il peut apparaître en série, à la sortie de la mémoire 33', 126 échantillons représentatifs de la composante en quadrature $C_q$ de la fonction de corrélation recherchée, avec une fréquence d'échantillonnage de 200 Hz.

Les mémoires 33 et 33' dans lesquelles sont formées pendant l'étape II les échantillons des composantes $C_p$ et $C_q$ sont lues, à vitesse élevée de préférence, par le même signal de lecture I à l'issue de cette étape II. Les échantillons correspondants sont appliqués simultanément au circuit de calcul 34 qui calcule le module C de la fonction de corrélation, soit la quantité

$$\sqrt{C_p^2 + C_q^2}.$$

On peut généralement se contenter de valeurs approchés de cette quantité, calculés à l'aide de procédés bien connus. Les 126 échantillons successifs du module C de la fonction de corrélation, formés à la fréquence d'échantillonnage de 200 Hz, sont stockés dans des emplacements de la mémoire 36 afin d'être utilisés dans l'étape III du procédé de l'invention. Etant donné que le temps de lecture des échantillons dans les mémoires 33 et 33' et que le calcul des 126 échantillons du module C dans le circuit 33 peuvent être effectués très rapidement, on suppose par la suite que cette étape III commence pratiquement à l'instant $t_2$.

Les corrélateurs élémentaires 31, 32, 31' et 32 sont identiques et peuvent être réalisés par exemple suivant le schéma de la figure 4. Sur cette figure on a représenté le corrélateur élémentaire 31 utilisant la partie $33_p$ de la mémoire 33. Ce corrélateur élémentaire 31 utilise une mémoire 60 à 63 éléments, qui peut être commune aux autres autocorrélateurs élémentaires. Dans cette mémoire 60 s'inscrivent les éléments successifs du signal en bande de base B qui apparaissent à la cadence de 100 Hz. Cette mémoire 60 est agencée pour fournir sur ses 63 sorties $B_1$ à $B_{63}$ les 63 derniers éléments inscrits du signal B. Les éléments du signal B apparaissant sur ces sorties $B_1$ à $B_{63}$ sont appliqués à une entrée des circuits multiplicateurs $M_1$ à $M_{63}$. Ces circuits multiplicateurs reçoivent sur une autre entrée le même signal constitué par les échantillons pairs du signal $R_p$, soit $R_p(p)$. Les produits formés à la sortie des circuits multiplicateurs $M_1$ à $M_{63}$ sont transmis à une entrée des circuits additionneurs $A_1$ à $A_{63}$, via des portes $P_1$ à $P_{63}$. Sous l'action d'un signal de commande AC, ces portes ne sont passantes que pendant la durée de l'étape II, s'étendant de l'instant $t_1$ à l'instant $t_2$. Les circuits additionneurs $A_1$ à $A_{63}$ sont connectés avec les éléments de mémoires $m_1$ à $m_{63}$, de façon à former 63 accumulateurs dans lesquels s'accumulent les produits formés à la sortie des multiplicateurs $M_1$ à $M_{63}$, pendant la durée s'étendant de l'instant $t_1$ à l'instant $t_2$. Les éléments de mémoire $m_1$ à $m_{63}$ sont remis à zéro par une impulsion RAZ se produisant à l'instant $t_1$. De cette manière, à partir de l'instant $t_2$, sont disponibles dans les éléments de mémoire $m_1$ à $m_{63}$, les 63 échantillons pairs de la fonction de corrélation entre le signal B et les échantillons pairs du signal $R_p$. Ces éléments $m_1$ à $m_{63}$ forment ensemble la partie $33_p$ de la mémoire 33, qui est associée au corrélateur élémentaire 31. Dans la partie $33_i$ de la mémoire 33, peuvent être formés de la même manière, à l'aide du corrélateur élémentaire 32 (non représenté sur la figure 4), les 63 échantillons impairs de la fonction de corrélation entre le signal B et les échantillons impairs du signal $R_p$. Comme on l'a déjà expliqué, ces échantillons pairs et impairs disponibles à l'instant $t_2$ dans la mémoire 33 peuvent apparaître en série et entrelacés à la sortie de la mémoire 33, sous la commande du signal de lecture I, pour former des échantillons à 200 Hz de la composante en phase $C_p$ de la fonction de corrélation recherchée.

L'étape III du procédé de l'invention mise en oeuvre dans le circuit 19 est un traitement des échantillons stockés dans la mémoire 36 pour en déduire le retard $\tau$ de l'écho lointain.

Dans le cas où l'on a utilisé à l'émission une séquence de données polyphases, ce traitement peut être particulièrement simple; en effet il résulte de la propriété de la fonction d'autocorrélation périodique de ce type de séquences, que tous les échantillons stockés dans la mémoire ont, au bruit près, une valeur nulle, sauf ceux engendrés par les échos proche et lointain. Le traitement pendant l'étape III (de l'instant $t_2$ à $t_3$) peut consister alors dans les opérations suivantes:

— lecture dans la mémoire 36, des échantillons C qui sont calculés dans l'étape II de l'instant $t'_1$ à l'instant $t_2$ (voir figure 2b), $t'_1$ étant l'instant

jusqu'où peuvent s'étendre au maximum les échantillons C engendrés par l'écho proche;
— détermination parmi les échantillons C lus, qui ne comportent donc que la contribution de l'écho lointain, de l'échantillon de valeur maximale qui est engendré par l'écho lointain;
— détermination du temps de retard $\tau$ de l'écho lointain en fonction du rang de l'échantillon de valeur maximale.

Dans le cas où l'on a utilisé à l'émission une séquence pseudo-aléatoire de longueur maximale, le traitement des échantillons C est un peu plus compliqué, du fait que la fonction d'autocorrélation périodique de ce type de séquence a des lobes secondaires non nuls. Le problème qui se présente dans ce cas et le moyen de le résoudre sont expliqués à l'aide des diagrammes en fonction du temps de la figure 5.

Sur le diagramme 5a, on a représenté schématiquement le signal $V_1$ représentant la fonction de corrélation que l'on obtiendrait, pendant l'intervalle de temps $(t_1, t_2)$ de l'étape II, si le signal reçu R était démodulé par une porteuse récupérée ayant la phase de la porteuse reçue. La courbe représentant $V_1$ présente à l'instant $t_p$ un pic dû à l'écho proche et à l'instant $t_1$ un pic dû à l'écho lointain, ces deux pics s'élevant au-dessus d'un niveau continu négatif de valeur $-V_m$, dû au fait que l'on a utilisé à l'émission une séquence de longueur maximale dont les lobes secondaires sont négatifs. Le niveau de l'écho proche est très grand vis à vis de celui de l'écho lointain (avec un rapport de 40 dB par exemple), de sorte que le niveau continu $-V_m$ dépend principalement du niveau de l'écho proche qui peut varier. Sur le diagramme 5b on a représenté le signal $V_2$ représentant le module C de la fonction de corrélation, calculé comme on l'a expliqué à l'aide de la figure 3, en opérant la démodulation à l'aide de la porteuse d'émission en phase et en quadrature. Les valeurs du signal $V_2$ sont obtenues en prenant la valeur absolue des valeurs du signal $V_1$. Les pics du signal $V_2$ dûs à l'écho proche et à l'écho lointain se trouvent de part et d'autre du niveau continu positif $V_m$. Pour éliminer, lors de la détermination du pic procuré par l'écho lointain, l'influence nuisible des variations inévitables du niveau continu $V_m$, on peut procéder dans le circuit 19 à un traitement préalable des échantillons lus dans la memoire 36, de façon que dans ce signal lu n'apparaisse plus, après ce traitement, que le pic dû à l'écho lointain s'élevant au-dessus du niveau zéro; le signal idéal $V_3$ à obtenir après ce traitement préalable est représenté sur le diagramme 5c, l'échelle des temps en abscisse représentant les temps réels de calcul de la corrélation.

La figure 6 représente un schéma possible du circuit 19 qui reçoit les échantillons lus dans la mémoire 36 du circuit 18 et dans lequel est effectué ce traitement préalable. On suppose que ces échantillons lus et parvenant à l'entrée du circuit 19, ont été calculés après l'instant $t'_1$ au cours de l'étape II et ne comportent donc pas le pic dû à l'écho proche. Le signal lu dans ces conditions et qui, en temps réel, est le signal $V_2$ représenté sur le diagramme 4b à partir de l'instant $t'_1$, est appliqué à un circuit 40 à travers une porte 41 qui transmet ce signal $V_2$ grâce à un signal de commande S' approprié, pendant un intervalle de temps correspondant en temps réel à l'intervalle $(t'_1, t'_2)$ dans lequel aucun écho proche ou lointain ne se produit; $t'_1$ et $t'_2$ sont par exemple distants de 50 ms et 200 ms de l'instant $t_1$. Le circuit 40 forme la moyenne des échantillons qui lui sont appliqués et fournit donc le niveau continu $V_m$ qui est appliqué et maintenu à l'entrée (−) du circuit de différence 42 jusqu'à la fin du traitement, allant en temps réel jusqu'à l'instant $t_2$. Le signal lu $V_2$ est appliqué d'autre part à l'entrée (+) du circuit de différence 42 à travers une porte 43 qui est commandé par le signal $\overline{S}'$, complémentaire de S'. De cette manière le signal lu $V_2$ est appliqué à l'entrée (+) du circuit de différence 42 à partir de l'instant $t'_2$. Le signal fourni par ce circuit de différence est appliqué au circuit 46 qui en prend la valeur absolue, de sorte que le signal fourni par ce circuit 46 s'identifie au signal $V_3$ représenté en temps réel sur le diagramme 5c. Les échantillons du signal $V_3$ sont comparés à un seuil $V_0$ à l'aide du circuit comparateur 44. L'information de dépassement du seuil par un échantillon est fournie au circuit 45, dans lequel est déterminé le rang de cet échantillon, qui correspond aù retard τ de l'écho lointain. Il peut être avantageux que le seuil $V_0$ ne soit pas fixe, mais dépende du niveau continu $V_m$ mesuré, selon la loi $V_0 = k\, V_m$ k étant un coefficient de proportionnalité à régler. On a ainsi un seuil variable, s'adaptant un niveau de bruit dans le milieu de transmission, ce qui procure une probabilité d'erreur fixe, alors qu'avec un seuil fixe on aurait une probabilité d'erreur dépendant du niveau de transmission. On doit noter que tous les échantillons du signal $V_3$ sont comparés au seuil $V_0$ et chaque fois qu'il y a un dépassement de seuil, le circuit 45 compare l'amplitude de ce nouveau dépassement au dépassement précédent et si cette amplitude est plus importante, le circuit 45 mémorise l'amplitude de ce nouveau dépassement et son rang est déterminé. Sinon, le dépassement précédent est conservé.

On peut remarquer que le circuit 19 représenté sur la figure 6 peut servir également lorsqu'on utilise à l'émission une séquence de données polyphases. Grâce à l'emploi d'un seuil, il permet d'éliminer complètement l'influence du bruit dans la détermination de l'échantillon engendré par l'écho lointain.

Le procédé de l'invention et les dispositifs correspondants ont été décrits ci-dessus dans le cas où l'on émet une première séquence de données puis une deuxième séquence au cours de laquelle sont calculés des échantillons de fonction de corrélation, qui sont traités lors de l'étape III. Mais pour améliorer le rapport signal/bruit lors de ce traitement, on peut aussi émettre à la suite d'une première séquence, un certaine nombre d'autres séquences au cours de chacune desquelles sont calculés des échantillons de fonction de corrélation, les échantillons correspondants calculés au cours de ces autres séquences étant intégrés avant d'être traités lors de l'étape III, comme on l'a expliqué.

**Revendications**

1. Procédé utilisé dans un dispositif d'annulation d'écho incorporé dans un équipement émetteur-récepteur pour annuler dans la voie réception un signal d'écho engendré par un signal appliqué à la voie émission et formé d'un écho proche ($\varepsilon_p$) pratiquement non retardé et d'un écho lointain ($\varepsilon_l$) retardé, ce dispositif d'annulation d'écho comprenant un annuleur (11), de l'écho proche recevant un signal (D) de la voie émission et un annuleur (13) de l'écho lointain recevant ledit signal de la voie émission affecté d'un retard (τ) substantiellement égal au retard mesuré de l'écho lointain, ce procédé destiné à mesurer le retard de l'écho lointain étant caractérisé en ce qu'il comporte les étapes suivantes:

— l'émission par modulation d'une porteuse d'au moins une séquence de données ayant une fonction d'autocorrélation périodique à lobes latéraux de valeur négative ou nulle, ayant une durée au moins égale à la valeur maximale du retard à mesurer et un nombre d'éléments déterminé par la précision souhaitée pour la mesure du retard;
— après chaque séquence émise, le calcul de la fonction de corrélation entre les données de la séquence suivante émise et les données formées en démodulant le signal reçu et l'enregistrement dans une mémoire d'échantillons successifs, représentatifs de cette fonction de corrélation;
— après de calcul de ladite fonction de corrélation, un traitement des échantillons enregistrés consistant, après l'élimination des échantillons pouvant dépendre de l'écho proche, à déterminer l'échantillon correspondant au maximum de la fonction de corrélation et à déduire du rang de cet échantillon le retard de l'écho lointain.

2. Procédé selon la revendication 1, caractérisé en ce que ladite séquence de données utilisée pour moduler une porteuse dans la voie émission est une séquence pseudo-aléatoire de longueur maximale, formée d'éléments de valeur +1 ou −1.

3. Procédé selon la revendication 1, caractérisé en ce que ladite séquence de données utilisée pour moduler une porteuse dans la voie émission est une séquence de données formée d'éléments complexes de sorte que la fonction d'autocorrélation périodique de cette séquence ait des lobes latéraux de valeur nulle.

4. Procédé selon l'une des revendications 1 à 3, utilisé dans un modem transmettant normalement des données par modulation d'une porteuse au rythme de modulation H, caractérisé en ce que la durée de chaque donnée dans ladite séquence de données est choisie de façon à être égale à m/H (m entier) et l'émission de ladite séquence de données s'effectue en modulant la porteuse au rythme de modulation H et en répétant m fois la même valeur de donné pour chaque donnée de la séquence.

5. Procédé selon la revendication 4, caractérisé en ce que la fréquence de la porteuse utilisée pour l'émission de ladite séquence de données est choisie égale au rythme de modulation H.

6. Dispositif utilisant le procédé selon l'une des revendications 1 à 5, caractérisé en ce qu'il comporte des moyens (20—23) pour démoduler le signal reçu (R) à l'aide de la porteuse d'émission en phase et en quadrature (E, E') et former ainsi en bande de base les deux composantes en phase et en quadrature du signal reçu, H étant le rythme de modulation de la porteux, et m/H (in entier) la durée de chaque donné dans ladite séquence de données, des moyens (24, 25) pour échantillonner à la fréquence 2H/m ces deux composantes, des moyens (26, 27, 34) de calcul pour calculer des échantillons du module de la fonction de corrélattion périodique entre les données d'une nouvelle séquence succédant à chaque séquence émise et le signal complexe formé par ces deux composantes, enfin une mémoire (36) pour stocker les échantillons successifs du module de cette fonction de corrélation.

7. Dispositif selon la revendication 6, caractérisé en ce que, lorsque plusieurs séquences successives sont émises, il est prévu des moyens pour intégrer les échantillons correspondants du module de la fonction de corrélation, calculés au cours des séquences émises successives, lesdits échantillons intégrés constituant les échantillons stockés dans ladite mémoire.

8. Dispositif selon l'une des revendications 6 ou 7, convenant lorsque la fréquence de la porteuse utilisée pour l'émission de ladite séquence de données est égale au rythme de modulation H, caractérisé en ce que les moyens pour démoduler le signal reçu consistent en deux circuits d'échantillonnage échantillonnant le signal reçu avec deux signaux d'échantillonnage (E, E') ayant la fréquence H et déphasés de 90°.

9. Dispositif selon l'une des revendications 6 à 8, convenant lorsque la fonction d'autocorrélation périodique de la séquence des données utilisée pour moduler une porteuse, a des lobes latéraux de valeur nulle, caractérisé en ce qu'il comporte des moyens pour lire dans ladite mémoire (36) les échantillons formés dans un intervalle de temps prédéterminé exempt d'écho proche, des moyens (44) pour comparer les échantillons lus à un seuil (Vo), enfin des moyens (45) pour déterminer le rang de l'échantillon dépassant ledit seuil.

10. Dispositif selon l'une des revendications 6 à 8, convenant lorsque la fonction d'autocorrélation périodique de la séquence de données utilisée pour moduler une porteuse, a des lobes latéraux de valeur négative ou nulle, caractérisé en ce qu'il comporte des moyens pour lire dans ladite mémoire (36), les échantillons formés dans un intervalle de temps prédéterminé $(t'_1—t_2)$ exempt d'écho proche, des moyens (40) pour former la valeur moyenne (Vm) des échantillons lus, formés dans un intervalle de temps prédéterminé $(t'_1—t'_2)$ exempt d'échos proche ou lointain, des moyens (42) pour former des échantillons de différence entre les échantillons lus et ladite valeur moyenne dans un intervalle de temps prédéterminé $(t'_2—t_2)$ où seulement un écho lointain peut se produire, des moyens (44) pour comparer la valeur absolue desdits échantillons de différence à un seuil (Vo), enfin des moyens (45) pour déterminer le rang de l'échantillon de différence ayant la plus grande valeur absolue dépassant ledit seuil.

11. Dispositif selon la revendication 10, caractérisé en ce que ladite seuil (Vo) est proportionnel à ladite valeur moyenne (Vm).

**Patentansprüche**

1. Verfahren zur Anwendung in einer sich in einer Sende-Empfangsanordnung befindlichen Echounterdrückungseinrichtung zum auf dem Empfangsweg Unterdrücken eines Echosignals, das durch ein dem Sendeweg zugeführtes Signal erzeugt wird und das aus einem nahezu unverzögerten Nahecho ($E_p$) und einem verzögerten Fernecho ($E_l$) besteht, wobei diese Echounterdrückungseinrichtung einen Nahechounterdrücker (11) aufweist, der ein Signal (D) von dem Sendeweg erhält und einen Fernechounterdrücker (13), der das genannte Signal von dem Sendeweg mit einer Verzögerung ($\tau$) erhält, die im wesentlichen der gemessenen Verzögerung des Fernechos entspricht, wobei dieses Verfahren zum Messen der Verzögerung des Fernechos dadurch gekennzeichnet ist, dass es die folgenden Schritte aufweist:

— das durch Modulation eines Trägers Aussenden mindestens einer Datenfolge mit einer periodischen Autokorrelationsfunktion, die Seitenkeulen mit einem negativen Wert oder mit dem Wert Null aufweist, mit einer Dauer wenigstens gleich dem Maximalwert der zu messenden Verzögerung und mit einer Anzahl Elemente, die durch die gewünschte Genauigkeit zur Messung der Verzögerung bestimmt wird;

— das nach jeder ausgesendeten Folge Berechnen der Korrelationsfunktion zwischen den Daten der nächsten ausgesendeten Folge und den durch Demodulation des empfangenen Signals gebildeten Daten und das in einem Speicher Speichern der aufeinanderfolgenden Abtastwerte, die für die genannte Korrelationsfunktion repräsentativ sind;

— das nach dem Berechnen der genannten Korrelationsfunktion Verarbeiten der gespeicherten Abtastwerte, das nach Unterdrückung von dem Nahecho möglich abhängigen Abtastwerten aus dem Bestimmen des Abtastwertes, der dem Maximum der genannten Korrelationsfunktion entspricht, und dem Ableiten der Verzögerung des Fernechos aus der Rangordnung dieses Abtastwertes besteht.

2. Verfahren nach Anspruch 1, dadurch gekennzeichnet, dass die genannte, zum Modulieren eines Trägers in dem Sendeweg verwendete Datenfolge eine Pseudo-Zufallsfolge maximaler Länge aus Elementen mit einem Wert $+1$ oder $-1$ ist.

3. Verfahren nach Anspruch 1, dadurch gekennzeichnet, dass die genannte, zum Modulieren eines Trägers in dem Sendeweg verwendete Datenfolge eine derart aus komplexen Elementen gebildete Datenfolge ist, dass die periodische Autokorrelationsfunktion dieser Datenfolge Seitenkeulen mit dem Wert Null aufweist.

4. Verfahren nach einem der Ansprüche 1 bis 3, das in einem Modem angewandt wird, der normalerweise Daten durch Modulation eines Trägers mit einer Schrittgeschwindigkeit H überträgt, dadurch gekennzeichnet, dass die Dauer jedes Datenelementes in der genannten Datenfolge gleich m/H ist (m=eine ganze Zahl) und dass das Aussenden der genannten Datenfolge durch Modulation des Trägers mit der Schrittgeschwindigkeit H und durch m-fache Wiederholung eines selben Datenwertes für jedes Datenelement in der genannten Folge durchgeführt wird.

5. Verfahren nach Anspruch 4, dadurch gekennzeichnet, dass die Frequenz des zum Übertragen der genannten Datenfolge verwendeten Trägers der Schrittgeschwindigkeit H entspricht.

6. Vorrichtung zum Durchführen des Verfahrens nach einem der Ansprüche 1 bis 5, dadurch gekennzeichnet, dass diese Vorrichtung Mittel (20—23) aufweist zum Demodulieren des empfangenen Signals (R) mit Hilfe des In-Phase und des Quadraturphase Senderträgers (E, E'), und zum auf diese Weise Bilden der zwei In-Phase und Quadraturphase Basisbandelemente des empfangenen Signals, wobei H die Schrittgeschwindigkeit der Modulation des Trägers ist und m/H (m= eine ganze Zahl) die Dauer jedes Datums in der genannten Datenfolge ist, weiterhin Mittel (24, 25) zum mit der Frequenz 2H/m Abtasten dieser zwei Elemente, weiterhin Mittel (26, 27, 34) zum Berechnen der Abtastwerte des Absolutwerts der periodischen Korrelationsfunktion zwischen den Daten einer neuen, auf jede ausgesendete Folge folgenden Datenfolge und dem durch die genannten zwei Elemente gebildeten Komplexen Signal und zum Schluss einen Speicher (36) zum Speichern der aufeinanderfolgenden Abtastwerte des Absolutwerts der genannten Korrelationsfunktion.

7. Vorrichtung nach Anspruch 6, dadurch gekennzeichnet, dass wenn mehrere aufeinanderfolgende Folgen ausgesendet werden die genannte Vorrichtung Mittel enthält zum Integrieren der entsprechenden Abtastwerte des Absolutwertes der genannten Korrelationsfunktion, die im Laufe der aufeinanderfolgenden ausgesendeten Folgen berechnet sind, wobei die genannten integrierten Abtastwerte die in dem genannten Speicher gespeicherten Abtastwerte bilden.

8. Vorrichtung nach einem der Ansprüch 6 oder 7 geeignet für den Fall, dass die Frequenz des verwendeten Trägers zum Aussenden der genannten Datenfolge der Schrittgeschwindigkeit H der Modulation entspricht, dadurch gekennzeichnet, dass die Mittel zum Demodulieren des empfangenen Signals aus zwei Abtastanordnungen bestehen die das empfangene Signal mit Hilfe von zwei Abtastsignalen (E, E') mit einer Frequenz H und mit einer gegenseitigen Phasenverschiebung von $90°$ abtasten.

9. Vorrichtung nach einem der Ansprüche 6 bis 8, geeignet für den Fall, dass die periodische Autokorrelationsfunktion der zum Modulieren des Trägers verwendeten Datenfolge Seitenkeulen mit dem Wert Null aufweist, dadurch gekennzeichnet, dass die genannte Vorrichtung Mittel aufweist zum aus dem genannten Speicher Lesen von Abtastwerten, die in einem vorbestimmten Zeitintervall ohne Nahecho gebildet sind, Mittel zum Vergleichen der ausgelesenen Abtastwerte mit einer Schwelle und Mittel zum Bestimmen der Rangordnung jedes Abtastwertes, der die genannte Schwelle überschreitet.

10. Vorrichtung nach einem der Ansprüche 6 bis 8 geeignet für den Fall, dass die periodische Autokorrelationsfunktion der zum Modulieren des Trägers verwendeten Datenfolge Seitenkeulen mit negativem Wert oder mit dem Wert Null aufweist, dadurch gekennzeichnet, dass die genannte Vorrichtung Mittel aufweist zum aus dem genannten Speicher (36) Auslesen der Abtastwerte, die in einem vorbestimmten Zeitintervall ($t_1'—t_2$) ohne Nahecho gebildet sind, Mittel (40) zum Bilden des Mittelwertes ($V_m$) der ausgelesenen Abtastwerte, die in einem vorbestimmten Zeitintervall ($t_1'—t_2'$) ohne Nahecho oder Fernecho gebildet sind, Mittel (42) zum Bilden von Abtastwerten der Differenz zwischen den ausgelesenen Abtastwerten und dem genannten Mittelwert in einem vorbestimmten Zeitintervall ($t_2'—t_2$), in dem nur ein Fernecho erzeugt werden kann, Mittel (44) zum Vergleichen des Abstolutwertes der genannten Differenzabtastwerte mit einer Schwelle ($V_o$) und Mittel (45) zum Bestimmen der Rangordnung des Differenzabtastwertes mit dem grössten Absolutwert, der die genannte Schwell überschreitet.

11. Vorrichtung nach Anspruch 10, dadurch gekennzeichnet, dass die genannte Schwelle ($V_o$) zu dem genannten Mittelwert ($V_m$) proportional ist.

**Claims**

1. A method used in an echo cancelling arrangement incorporated in a transceiver arrangement for cancelling in the receive path an echo signal produced in response to a signal applied to the transmit path and consisting of a substantially undelayed near echo ($E_p$) and a delayed distant echo ($E_l$), said echo cancelling arrangement comprising a near echo canceller (11) receiving a signal (D) from the transmit path and a distant echo canceller (13) receiving the said signal from the transmit path with a delay ($\tau$) substantially equal to the measured distant echo delay, said method intended for measuring the echo delay of the distant echo, being characterized in that it comprises the following steps:

— transmission, by modulation of a carrier, of at least one data sequence having a periodic autocorrelation function with sidelobes of negative or zero value, and having a duration at least equal to the maximum value of the delay to be measured and a number of elements determined by the accuracy desired for the measurement of the delay;

— after each transmitted sequence, calculation of the correlation function between the data of the next transmitted sequence and the data formed by demodulating the received signal and storing successive samples representative of said correlation function in a memory;

— after calculation of said correlation function, a processing of the stored samples consisting, after elimination of samples which may depend on the near echo, in determining the sample corresponding to the maximum of said correlation function and in deducing the delay of the distant echo from the rank of this sample.

2. A method as claimed in claim 1, in which said data sequence used to modulate a carrier in the transmit path is a maximum-length pseudorandom sequence of elements having a value $+1$ or $-1$.

3. A method as claimed in claim 1, in which said data sequence used to modulate a carrier in the transmit path is a data sequence formed of complex elements such that its periodic autocorrelation function has sidelobes of zero value.

4. A method as claimed in any of claims 1 to 3, used in a modem normally transmitting data by modulation of a carrier at a modulation rate H, characterized in that the duration of each data element in said data sequence is equal to m/H (m being an integer) and the transmission of said data sequence is performed by modulating the carrier at the modulation rate H and repeating m times a same data value for each data element in said sequence.

5. A method as claimed in claim 4, in which the frequency of the carrier used for transmission of said data sequence is equal to the modulation rate H.

6. An apparatus for carrying out a method as claimed in any of claims 1 to 5, characterized in that said apparatus comprises means (20—23) for demodulating the received signal (R) with the aid of the inphase and quadrature-phase transmission carrier (E, E′) and thus forming the two in-phase and quadrature-phase baseband components of the received signal, H being the carrier modulation rate and m/H (m being an integer) being the duration of each data element in said data sequence, means (24, 25) for sampling said two components at a frequency 2H/m, means for calculating samples of the modulus of the periodic correlation function between the data of a new sequence succeeding each transmitted sequence and the complex signal formed by said two components, and finally a memory for storing the successive samples of the modulus of said correlation function.

7. An apparatus as claimed in claim 6, characterized in that, when several successive sequences are transmitted, said apparatus comprise means for integrating the corresponding samples of the modulus of said correlation function, calculated in the course of the successive transmitted sequences, said integrated samples constituting the samples stored in the said memory.

8. An apparatus as claimed in one of the claims 6 or 7, suitable for use when the frequency of the carrier utilized for transmission of said data sequence is equal to the modulation rate H, characterized in that said means for demodulating the received signal consist of two sampling circuits sampling the received signal with two sampling signals (E, E′) having a frequency H and a mutual phase shift of 90°.

9. An apparatus as claimed in any of claims 6 to 8, suitable for use when the periodic autocorrelation function of the data sequence utilized to modulate the carrier has sidelobes of zero value, characterized in that said apparatus comprises means for reading from said memory (36) the samples formed in a predetermined time interval free from near echo, means (44) for comparing the read-out samples with a threshold ($V_o$), and finally means (45) for determining the rank of any sample exceeding the said threshold.

10. An apparatus as claimed in any of claims 6 to 8, suitable for use when the periodic autocorrelation function of the data sequence utilized to modulate the carrier has sidelobes of negative or zero value, characterized in that said apparatus comprises means for reading from said memory (36) the samples formed in a predetermined time interval ($t_1′$—$t_2$) free from near echo, means (40) for forming the mean value ($V_m$) of the read-out samples formed in a predetermined time interval ($t_1′$—$t_2′$) free from near or distant echoes, means (42) for forming samples of the difference between the read-out samples and said mean value in a predetermined time interval ($t_2′$—$t_2$) in which only a distant echo can be produced, means (44) for comparing the absolute value of the said difference samples with a threshold ($V_o$), and means (45) for determining the rank of the difference sample having the largest absolute value exceeding the said threshold.

11. An apparatus as claimed in claim 10 characterized in that said threshold ($V_o$) is proportional to said mean value ($V_m$).

FIG.1

FIG.2

FIG.4

FIG.3

FIG.5

FIG.6